(19) Europäisches Patentamt
European Patent Office
Office européen des brevets

(11) Veröffentlichungsnummer : **0 362 633 B1**

# (12) EUROPÄISCHE PATENTSCHRIFT

(45) Veröffentlichungstag der Patentschrift : **15.07.92 Patentblatt 92/29**

(51) Int. Cl.$^5$ : **A01N 47/38,** // (A01N47/38, 43:707)

(21) Anmeldenummer : **89117495.5**

(22) Anmeldetag : **21.09.89**

## (54) Selektiv-herbizide Mittel, enthaltend Metamitron in Kombination mit bestimmten Triazolinonen.

(30) Priorität : **05.10.88 DE 3833801**

(43) Veröffentlichungstag der Anmeldung : **11.04.90 Patentblatt 90/15**

(45) Bekanntmachung des Hinweises auf die Patenterteilung : **15.07.92 Patentblatt 92/29**

(84) Benannte Vertragsstaaten : **BE DE FR GB IT NL**

(56) Entgegenhaltungen : **EP-A- 0 294 666**
**GB-A- 2 072 507**

(73) Patentinhaber : **BAYER AG**
**W-5090 Leverkusen 1 Bayerwerk (DE)**

(72) Erfinder : **Lindig, Markus, Dr.**
**Dahlienweg 16**
**W-4010 Hilden (DE)**
Erfinder : **Müller, Klaus-Helmut, Dr.**
**Bockhackstrasse 55**
**W-4000 Düsseldorf 13 (DE)**
Erfinder : **Feucht, Dieter, Dr.**
**Geschwister Scholl Strasse 88**
**W-4019 Monheim 2 (DE)**
Erfinder : **Schmidt, Robert R., Dr.**
**Im Waldwinkel 110**
**W-5060 Bergisch-Gladbach 2 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

## Beschreibung

Die Erfindung betrifft neue herbizide, synergistische Wirkstoffkombinationen, die aus Metamitron einerseits und bestimmten Triazolinonen andererseits bestehen und mit besonderem Vorteil zur selektiven Unkrautbekämpfung in Rübenkulturen verwendet werden können, wobei auch schwer bekämpfbare Rübenunkräuter wie Galium und Mercurialis sicher bekämpft werden.

Es ist bereits bekannt geworden, daß 4-Amino-3-methyl-6-phenyl-1,2,4-triazin-5(4H)-on (common name: Metamitron) als selektives Herbizid in Rübenkulturen eintgesetzt werden kann (vgl. DE-OS 22 24 161, US-PS 3 847 914). Der Wirkstoff Metamitron ist bei sehr guter herbizider Wirkung selektiv in Zuckerrüben einsetzbar und hat in dieser Indikation praktische Bedeutung erlangt.

Gegen bestimmte Unkräuter ist die Wirkung des Metamitron aber nicht immer ausreichend. So wird Galium aparine nur bei erhöhten Dosierungen bekämpft und Mercurialis annua praktisch gar nicht.

Es wurde nun überraschend gefunden, daß die neuen Wirkstoffkombinationen bestehend aus

(1) 4-Amino-3-methyl-6-phenyl-1,2,4-triazin-5(4H)-on (Metamitron) der Formel (I)

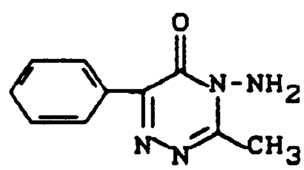

(I)

und

(2) mindestens einem, am Amidstickstoffatom substituierten, 4-Amino-1-carbamoyl-3-methyl-1,2,4-(1H)-triazolin-5-on der allgemeinen Formel (II)

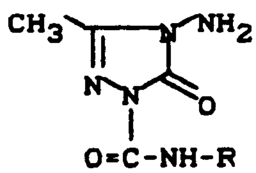

(II),

in welcher

R für geradkettiges oder verzweigtes $C_1$-$C_{10}$-Alkyl (welches gegebenenfalls durch Halogen substituiert sein kann), für geradkettiges oder verzweigtes $C_3$-$C_8$-Alkenyl oder $C_3$-$C_8$-Alkinyl oder für $C_3$-$C_6$-Cycloalkyl (welches gegebenenfalls durch Methyl oder Trifluormethyl substituiert sein kann) steht,

eine besonders hohe herbizide Wirksamkeit aufweisen, ohne Rübenkulturen zu schädigen.

Bevorzugte Wirkstoffe gemäß Formel (II) sind solche Verbindungen der allgemeinen Formel (II), worin

R für gegebenenfalls durch Fluor oder Chlor substituiertes $C_3$-$C_8$-Alkyl, für $C_3$-$C_5$-Alkenyl, für $C_3$-$C_5$-Alkinyl oder für gegebenenfalls durch Trifluormethyl substituiertes $C_3$-$C_6$-Cycloalkyl steht.

Besonders bevorzugte wirkstoffe gemäß Formel (II) sind solche Verbindungen der allgemeinen Formel (II), worin R folgende Bedeutungen hat:

R = $-C(CH_3)_3$ (II-1)

R = $-C(CH_3)_2-CH_2-Cl$ (II-2)

R = 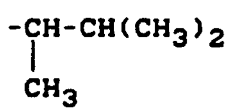 (II-3)

R = $-C(CH_3)_2-CH_2-CH_3$ (II-4)

R = $-C(CH_3)_2-CH_2-F$ (II-5)

R = $-C(CH_3)_2-C\equiv CH$ (II-6)

R = $-C(CH_3)_2-C_3H_7$-n (II-7)

R = $-C(CH_3)_2-CH(CH_3)_2$ (II-8)
R = $-C(CH_3)_2-C_4H_9-n$ (II-9)
R = $-C(CH_3)_2-CF_3$ (II-10)

R = 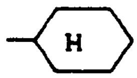 (II-11)

R = 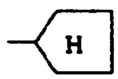 (II-12)

R = 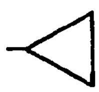 (II-13)

R = 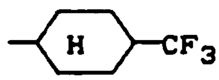 (II-14)

R = 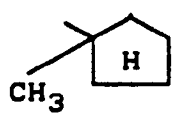 (II-15)

Überraschenderweise ist die herbizide Wirksamkeit der erfindungsgemäßen Wirkstoffkombination wesentlich höher als die Summe der Wirkungen der einzelnen Wirkstoffe. Es liegt somit ein nicht vorhersehbarer echter synergistischer Effekt vor und nicht nur eine Wirkungsergänzung. Die neuen Wirkstoffkombinationen sind ebenso wie Metamitron (I) in Rübenkulturen sehr gut verträglich, wobei die neuen Wirkstoffkombinationen auch die sonst schwer bekämpfbaren "Problemunkräuter" Galium und Mercurialis hervorragend bekämpfen. Die neuen Wirkstoffkombinationen stellen somit eine wertvolle Bereicherung der Rübenherbizide dar.

Als Unkräuter, die im allgemeinen als Verunreinigung in Rübenkulturen auftreten und durch die erfindungsgemäßen Wirkstoffkombinationen sicher bekämpft werden können, seien beispielsweise genannt:
dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Mercurialis; sowie
monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die erfindungsgemäßen Wirkstoffkombinationen weisen, wie bereits angegeben, bei sehr guter Verträglichkeit gegenüber Rübenkulturen eine hervorragende Wirkung gegen Unkräuter und Ungräser auf; ihr Einsatz als selektive Rübenherbizide ist daher besonders bevorzugt.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) 0,01 bis 10 Gewichtsteile, vorzugsweise 0,1 bis 5 Gewichtsteile und besonders bevorzugt 0,2 bis 1,2 Gewichtsteile Wirkstoff aus der Wirkstoffgruppe (II).

Die erfindungsgemäßen Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsionskonzentrate, Wirkstoff-imprägnierte Natur- und synthetische Stoffe, Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffkombination, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch als Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Rübenherbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im post-emergence-Verfahren, kann es ferner vorteilhaft sein, in die Formulierungen als weitere Zusatzstoffe pflanzenverträgliche mineralische oder vegetabilische Öle (z.B. das Handelspräparat "Sun Oil 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der erfindungsgemäßen Wirkstoffkombinationen können in einem gewissen Bereich variiert werden; sie hängen u.a. vom Wetter und von den Bodenfaktoren ab. Im allgemeinen liegen die Aufwandmengen zwischen 0.05 und 15 kg Wirkstoffkombination pro ha, vorzugsweise zwischen 0,5 und 10 kg/ha, besonders bevorzugt zwischen 1,5 und 6 kg/ha.

Die erfindungsgemäßen Wirkstoffkombinationen können sowohl vor als auch nach dem Auflaufen der Pflanzen appliziert werden, also im pre-emergence- oder im post-emergence-Verfahren.

Die gute herbizide Wirkung der neuen Wirkstoffkombinationen geht als den nachfolgenden Beispielen hervor. Während die einzelnen Wirkstoffe in der herbiziden Wirkung Schwächen aufweisen, zeigen die Kombinationen eine sehr breite Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R., "Calculating synergistic and antagonistic responses of herbicide combinations", Weeds 15, Seiten 20 - 22, 1967):

Wenn

X = % Schädigung durch Herbizid A bei p kg/ha Aufwandmenge und

Y = % Schädigung durch Herbizid B bei q kg/ha Aufwandmenge und

E = die erwartete Schädigung der Herbizide A und B, bei p und q kg/ha Aufwandmenge,

dann ist $E = X + Y - \frac{X \cdot Y}{100}$

Ist die tatsächliche Schädigung größer als berechnet, so ist die Kombination in ihrer Wirkung überadditiv, d.h. sie zeigt einen synergistischen Effekt.

Aus den nachfolgenden Beispielen geht hervor, daß die gefundene herbizide Wirkung der erfindungsgemäßen Wirkstoffkombinationen bei den Unkräutern größer ist als die berechnete, d.h., daß die neuen Wirkstoffkombinationen synergistisch wirken.

## Beispiel A

### Pre-emergence-Test

Lösungsmittel: 5 Gewichtsteile Aceton

Emulgator: 1 Gewichtsteil Alkylarylpolyglykolether

Zur Herstellung einer zweckmäßigen Wirkstoffzubereitung vermischt man 1 Gewichtsteil Wirkstoff bzw. Wirkstoffkombination mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)

100 % = totale Vernichtung

Wirkstoffe, Aufwandmengen und Resultate gehen aus den nachfolgenden Tabellen A-1, A-2, A-3 und A-4 hervor.

Tabelle A-1

pre-emergence-Test / Gewächshaus

| Wirkstoff bzw. Wirkstoffkombination | Aufwandmenge g/ha | Wirkung bzw. Schädigung in % | | | |
|---|---|---|---|---|---|
| | | Galium | | Zuckerrüben | |
| | | gef.* | ber.* | gef.* | ber.* |
| (I) - bekannt - | 2000 | 0 | | 0 | |
| | 1000 | 0 | | 0 | |
| (II-4) - bekannt - | 2000 | 70 | | 0 | |
| | 1000 | 0 | | 0 | |
| (I) + (II-4) erfindungsgemäß | 1000 + 1000 | 90 | 0 | 0 | 0 |

(I) = Metamitron

(II-4) = Verbindung der Formel (II) mit R = $-C(CH_3)_2-CH_2-CH_3$

* gef. = gefundene Schädigung (in Prozent)

* ber. = nach der COLBY-Formel berechnete Schädigung (in Prozent)

Tabelle A-2

pre-emergence-Test / Gewächshaus

| Wirkstoff bzw. Wirkstoffkombination | Aufwandmenge g/ha | Wirkung bzw. Schädigung in % | | | |
|---|---|---|---|---|---|
| | | Galium | | Zuckerrüben | |
| | | gef.* | ber.* | gef.* | ber.* |
| (I) - bekannt - | 500 | 0 | | 0 | |
| | 250 | 0 | | 0 | |
| (II-5) - bekannt - | 500 | 0 | | 0 | |
| | 250 | 0 | | 0 | |
| (I) + (II-5) erfindungsgemäß | 250 + 250 | 70 | 0 | 0 | 0 |

(I) = Metamitron

(II-5) = Verbindung der Formel (II) mit R = $-C(CH_3)_2-CH_2-F$

* gef. = gefundene Schädigung (in Prozent)

* ber. = nach der COLBY-Formel berechnete Schädigung (in Prozent)

## Tabelle A-3

pre-emergence-Test / Gewächshaus

| Wirkstoff bzw. Wirkstoffkombination | Aufwandmenge g/ha | Wirkung bzw. Schädigung in % | | | |
|---|---|---|---|---|---|
| | | Mercurialis | | Zuckerrüben | |
| | | gef.* | ber.* | gef.* | ber.* |
| (I) - bekannt - | 500 | 0 | | 0 | |
| | 250 | 0 | | 0 | |
| (II-5) - bekannt - | 500 | 60 | | 0 | |
| | 250 | 20 | | 0 | |
| (I) + (II-5) erfindungsgemäß | 250 + 250 | 100 | 20 | 0 | 0 |

(I) = Metamitron

(II-5) = Verbindung der Formel (II) mit R = $-C(CH_3)_2-CH_2-F$

* gef. = gefundene Schädigung (in Prozent)

* ber. = nach der COLBY-Formel berechnete Schädigung (in Prozent)

Tabelle A-4

pre-emergence-Test / Gewächshaus

| Wirkstoff bzw. Wirkstoffkombination | Aufwandmenge g/ha | Wirkung bzw. Schädigung in % | | | |
|---|---|---|---|---|---|
| | | Avena | | Zuckerrüben | |
| | | gef.* | ber.* | gef.* | ber.* |
| (I) - bekannt - | 1000 | 0 | | 0 | |
| | 500 | 0 | | 0 | |
| (II-6) - bekannt - | 1000 | 80 | | 0 | |
| | 500 | 0 | | 0 | |
| (I) + (II-6) erfindungsgemäß | 500 + 500 | 90 | 0 | 0 | 0 |

(I) = Metamitron

(II-6) = Verbindung der Formel (II) mit R = $-C(CH_3)_2-C\equiv CH$

* gef. = gefundene Schädigung (in Prozent)

* ber. = nach der COLBY-Formel berechnete Schädigung (in Prozent)

Beispiel B

Post-emergence-Test

Lösungsmittel: 5 Gewichtsteile Aceton
Emulgator: 1 Gewichtsteile Alkylarylpolyglykolether

Zur Herstellung einer zweckmäßigen Wirkstoffzubereitung vermischt man 1 Gewichtsteil Wirkstoff bzw. Wirkstoffkombination mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben so, daß die jeweils gewünschten Wirkstoffmengen pro Flächeneinheit ausgebracht werden. Die Konzentration der Spritzbrühe wird so gewählt, daß in 500 l Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.

Es bedeuten:

0 % = keine Wirkung (wie unbehandelte Kontrolle)
100 % = totale Vernichtung

Wirkstoffe, Aufwandmengen und Resultate gehen aus den nachfolgenden Tabellen B-1 und B-2 hervor.

Tabelle B-1

post-emergence-Test / Gewächshaus

| Wirkstoff bzw. Wirkstoffkombination | Aufwandmenge g/ha | Wirkung bzw. Schädigung in % | | | |
|---|---|---|---|---|---|
| | | Alopecurus | | Zuckerrüben | |
| | | gef.* | ber.* | gef.* | ber.* |
| (I) - bekannt - | 2000 | 70 | | 0 | |
| | 1000 | 60 | | 0 | |
| (II-1) - bekannt - | 2000 | 90 | | 0 | |
| | 1000 | 80 | | 0 | |
| (I) + (II-1) erfindungsgemäß | 1000 + 1000 | 100 | 92 | 0 | 0 |

(I) = Metamitron

(II-1) = Verbindung der Formel (II) mit R = $-C(CH_3)_3$

* gef. = gefundene Schädigung (in Prozent)

* ber. = nach der COLBY-Formel berechnete Schädigung (in Prozent)

Tabelle B-2

post-emergence-Test / Gewächshaus

| Wirkstoff bzw. Wirkstoffkombination | Aufwandmenge g/ha | Wirkung bzw. Schädigung in % | | | |
|---|---|---|---|---|---|
| | | Alopecurus | | Zuckerrüben | |
| | | gef.* | ber.* | gef.* | ber.* |
| (I) - bekannt - | 1000 | 10 | | 0 | |
| | 500 | 0 | | 0 | |
| | 250 | 0 | | 0 | |
| (II-5) - bekannt - | 1000 | 60 | | 0 | |
| | 500 | 10 | | 0 | |
| | 250 | 0 | | 0 | |
| (I) + (II-5) erfindungsgemäß | 500 + 500 | 70 | 10 | 0 | 0 |
| | 250 + 250 | 50 | 0 | 0 | 0 |

(I) = Metamitron

(II-5) = Verbindung der Formel (II) mit R = $-C(CH_3)_2-CH_2-F$

* gef. = gefundene Schädigung (in Prozent)

* ber. = nach der COLBY-Formel berechnete Schädigung (in Prozent)

Der Wirkstoff der Formel (I) ist bekannt (DE-OS 2 224 161 und US-PS 3 847 914). Die Wirkstoffe der Formel (II) sind noch nicht druckschriftlich beschrieben worden; sie sind Gegenstand der DE-Patentanmeldungen P 37 19 575.1 vom 12.06.87 (Le A 25 302) und P 38 03 523.5 vom 05.02.88 (Le A 25 852).

Die Wirkstoffe der allgemeinen Formel (II)

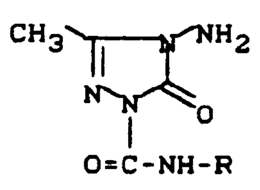

(II)

in welcher

R für geradkettiges oder verzweigtes $C_1$-$C_{10}$-Alkyl (welches gegebenenfalls durch Halogen substituiert sein kann), für geradkettiges oder verzweigtes $C_3$-$C_8$-Alkenyl oder $C_3$-$C_8$-Alkinyl oder für $C_3$-$C_6$-Cycloalkyl (welches gegebenenfalls durch Methyl oder Trifluormethyl substituiert sein kann) steht,

können hergestellt werden, indem man entweder

(a) 4-Amino-3-methyl-1,2,4-(1H)-triazolin-5-on der Formel (III)

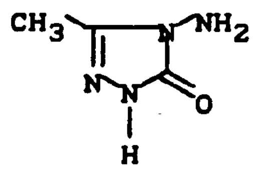

(III)

mit Isocyanaten der Formel (IV)

R-N = C = O (IV)

worin R die bei Formel (II) angegebenen Bedeutungen hat, gegebenenfalls in Gegenwart eines inerten organischen Lösungsmitels als Verdünnungsmittel (wie z.B. Acetonitril) und gegebenenfalls in Gegenwart eines basischen Reaktionshilfsmittels (wie z.B. Triethylamin) bei Temperaturen zwischen 0° und 150°C, vorzugsweise zwischen 20° und 100°C, umsetzt, wobei man pro Mol an Ausgangsstoff (III) im allgemeinen 1,0 bis 2,0 Mol, vorzugsweise 1,0 bis 1,5 Mol Isocyanat (IV) und gegebenenfalls 0,001 bis 2,0 Mol, vorzugsweise 0,01 bis 1,0 Mol an Reaktionshilfsmittel einsetzt, oder indem man

(b) Triazolinone der Formel (V)

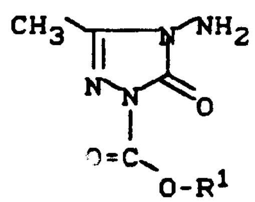

(V)

worin $R^1$ für $C_1$-$C_4$-Alkyl, Phenyl oder Benzyl steht, mit Aminen der Formel (VI)

$R$-$NH_2$ (VI)

worin R die oben bei Formel (II) angegebenen Bedeutungen hat, gegebenenfalls in Gegenwart eines inerten organischen Lösungsmittels als Verdünnungsmittel (wie z.B. Tetrahydrofuran und Dioxan) und gegebenenfalls in Gegenwart eines basischen Reaktionshilfsmittels (wie z.B. Natriumhydroxid, Kaliumcarbonat, Pyridin oder Triethylamin) bei Temperaturen zwischen 0° und 120°C, vorzugsweise zwischen 20° und 50°C, umsetzt, wobei man pro Mol Ausgangsstoff (V) im allgemeinen 1,0 bis 5,0 Mol, vorzugsweise 1,0 bis 2,5 Mol an Amin (VI) und gegebenenfalls 1,0 bis 2,0 Mol, vorzugsweise 1,0 bis 1,2 Mol an Reaktionshilfsmittel einsetzt (vgl. auch die Herstellugsbeispiele).

Das 4-Amino-3-methyl-1,2,4-(1H)-triazolin-5-on (III) ist bekannt (vgl. Europ. J.Med. Chem.; Chim. Ther. 18, 215 - 220 [1983]).

Die Ausgangsstoffe der Formel (V) sind noch nicht bekannt; sie können in Analogie zur Herstellung von eng verwandten, vorbekannten Verbindungen (vgl. z.B. J. Heterocycl. Chem. 17, 1691-1696 [1980]) hergestellt werden, indem man 4-Amino-3-methyl-1,2,4-(1H)-triazolin-5-on (III) mit Chlorameisensäureestern der Formel (VII)

$R^1$-O-CO-Cl (VII)

worin $R^1$ für $C_1$-$C_4$-Alkyl, Phenyl oder Benzyl steht, ggf. in Gegenwart eines Verdünnungsmittels (z.B. Tetrahydrofuran) und gegebenenfalls in Gegenwart eines Reaktionshilfsmitels ( wie beispielsweise Kalium-t-butylat oder Natriumhydrid) bei Temperaturen zwischen - 20°C und + 40°C umsetzt (vgl. auch die Herstellungsbeispiele).

Herstellungsbeispiele

Beispiel 1

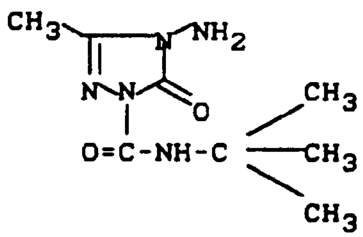

(II-1)

Zu einer Lösung von 3,42 g (0.03 Mol) 4-amino-3-methyl-1,2,4-(1H)-triazolin-5-on in 80 ml absolutem Acetonitril gibt man 3,6 g (0,036 Mol) t-Butylisocyanat und 0,1 g Diazabicycloundecen (DBU), rührt 2 Stunden bei 20°C, engt im Vakuum ein, nimmt den Rückstand in Dichlormethan auf, wäscht mit Wasser, trocknet über Natriumsulfat, engt im Vakuum ein und kristallisiert den Rückstand durch Verreiben mit Diethylether.

Man erhält 5,0 g (78,3 % der Theorie) an 4-Amino-1-(N-t-butylcarbamoyl)-3-methyl-1,2,4-triazolin -5-on vom Schmelzpunkt 132°C.

In entsprechender Weise und gemäß den allgemeinen Angaben zur Herstellung erhält man die folgenden substituierten Triazolinone der allgemeinen Formel (II):

Beispiel 2

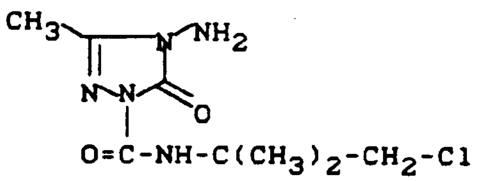

(II-2)

Schmelzpunkt: 118°C

Beispiel 3

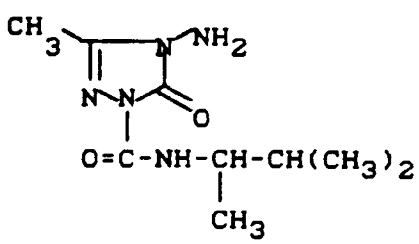

(II-3)

Schmelzpunkt: 103°C

Beispiel 4

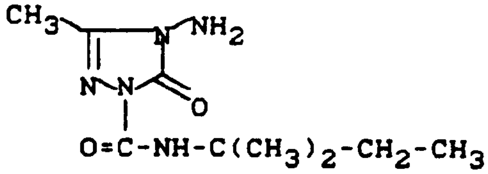

(II-4)

Schmelzpunkt: 99°C

Beispiel 5

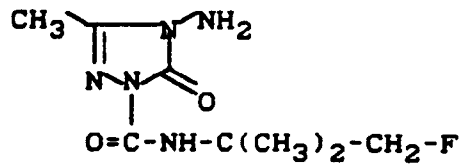

(II-5)

Schmelzpunkt: 178°C

Beispiel 6

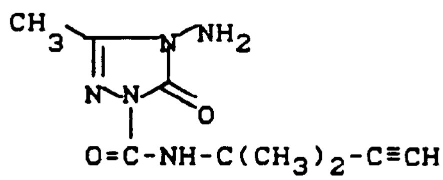

(II-6)

Schmelzpunkt: 119°C

Beispiel 7

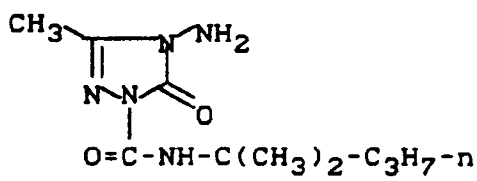

(II-7)

Schmelzpunkt: 110°C

Beispiel 8

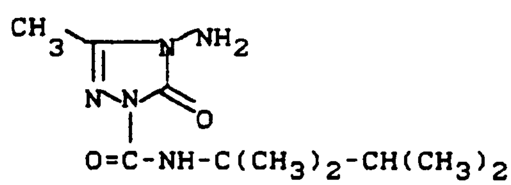

(II-8)

Schmelzpunkt: 134°C

Beispiel 9

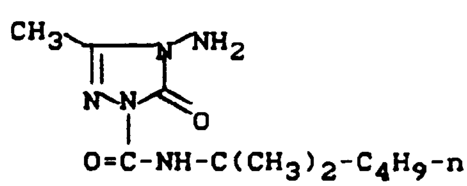

(II-9)

Brechungsindex: $n^{2}{}_{D}{}^{2}$ = 1.4891

Beispiel 10

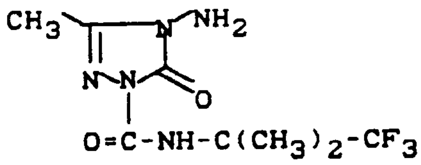

(II-10)

Schmelzpunkt: 150°C

Beispiel 11

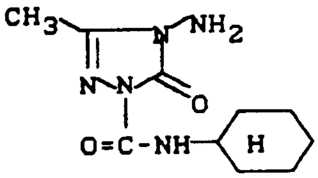

(II-11)

Schmelzpunkt: 148°C

Beispiel 12

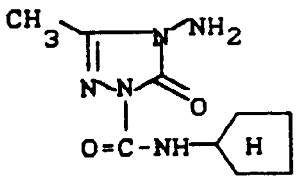

(II-12)

Schmelzpunkt: 94°C

Beispiel 13

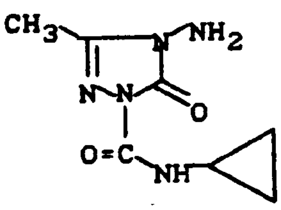

(II-13)

Schmelzpunkt: 134°C

Beispiel 14

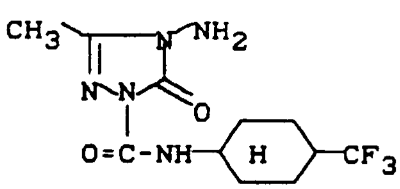

(II-14)

Schmelzpunkt: 162°C

Beispiel 15

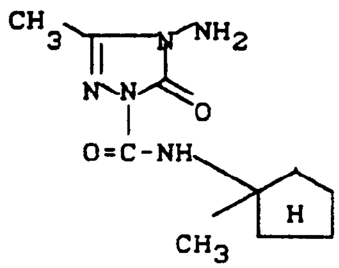

(II-15)

Schmelzpunkt: 145°C

Beispiel für einen Ausgangsstoff der Formel (V)

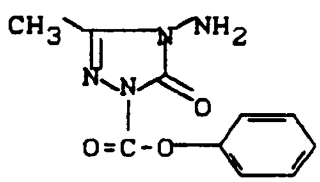

(V-1)

Zu einer Lösung von 2,3 g (0,02 Mol) 4-Amino-3-methyl-1,2,4-(1H)-triazolin-5-on in 25 ml absolutem Tetrahydrofuran gibt man 2,7 g (0,024 Mol) Kalium-t-butylat, rührt eine Stunde bei 20°C, gibt dann tropfenweise unter Rühren 3,1 g (0,02 Mol) Chlorameisensäurephenylester zu, rührt 12 Stunden bei Raumtemperatur, stellt dann mit Eisessig auf pH 5 ein, engt im Vakuum ein, nimmt den Rückstand in Chloroform auf, wäscht mit Wasser, trocknet über Natriumsulfat, engt im Vakuum ein und kristallisiert den Rückstand durch Verreiben mit Ether.

Man erhält 1,1 g (23,5 % der Theorie) an 4-Amino-3-methyl-1-phenoxycarbonyl-1,12,4-triazolin-5-on vom Schmelzpunkt 175°C.

## Patentansprüche

1. Selektiv-herbizide Mittel, gekennzeichnet durch einen Gehalt an einer Wirkstoffkombination bestehend aus

(1) 4-Amino-3-methyl-6-phenyl-1,2,4-triazin-5(4H)-on (Metamitron) der Formel (I)

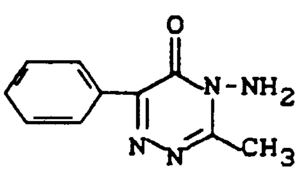

(I)

und

(2) mindestens einem, am Amidstickstoffatom substituierten, 4-Amino-1-carbamoyl-3-methyl-1,2,4-(1H)-triazolin-5-on der allgemeinen Formel (II)

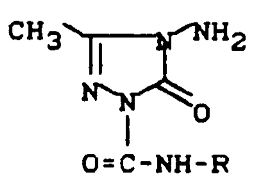

(II)

in welcher

R für geradkettiges oder verzweigtes $C_1$-$C_{10}$-Alkyl (welches gegebenenfalls durch Halogen substituiert sein kann), für geradkettiges oder verzweigtes $C_3$-$C_8$-Alkenyl oder $C_3$-$C_8$- Alkinyl oder für $C_3$-$C_6$-Cycloalkyl (welches gegebenenfalls durch Methyl oder Trifluormethyl substituiert sein kann) steht.

2. Selektiv-herbizide Mittel gemäß Anspruch 1, dadurch gekennzeichnet, daß in den wirkstoffkombinationen das Gewichtsverhältnis von Wirkstoff der Formel (I) zu dem Wirkstoff aus der Gruppe (II) zwischen 1 : 0,01 und 1 : 10, vorzugsweise zwischen 1 : 0,1 und 1 : 5 liegt.

3. Verfahren zur selektiven Bekämpfung von Unkraut in Rübenkulturen, dadurch gekennzeichnet, daß man eine Wirkstoffkombination gemäß Anspruch 1 vor oder nach dem Auflaufen der Pflanzen auf die Rübenfelder einwirken läßt.

4. Verwendung von Wirkstoffkombinationen gemäß Anspruch 1 zur selektiven Bekämpfung von Unkraut in Rübenkulturen.

5. Verfahren zur Herstellung von selektiv-herbiziden Mitteln, dadurch gekennzeichnet, daß man eine Wirkstoffkombination gemäß Anspruch 1 mit Streckmitteln under/oder oberflächenaktiven Mitteln vermischt.

6. Selektiv-herbizide Mittel gemäß Anspruch 1, dadurch gekennzeichnet, daß die Wirkstoffkombination aus Metamitron (I) und einer Verbindung der Formel (II)

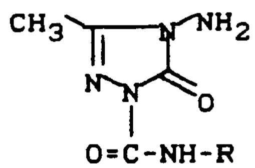

(II)

besteht, worin

R für gegebenenfalls durch Fluor oder Chlor substituiertes $C_3$-$C_8$-Alkyl, für $C_3$-$C_5$-Alkenyl, für $C_3$-$C_5$-Alkinyl oder für gegebenenfalls durch Trifluormethyl substituiertes $C_3$-$C_6$-Cycloalkyl steht.

7. Selektiv-herbizide Mittel gemäß Anspruch 1, dadurch gekennzeichnet, daß die Wirkstoffkombination aus Metamitron (I) und einer Verbindung der Formel (II)

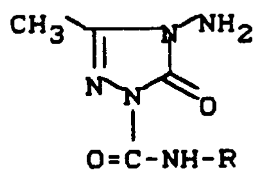

(II)

besteht, worin

R für einen der nachfolgend genannten Reste steht:

$-C(CH_3)_3$, $-C(CH_3)_2-CH_2-Cl$, 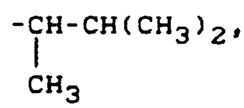

$-C(CH_3)_2-CH_2-CH_3$, $-C(CH_3)_2-CH_2-F$, $-C(CH_3)_2-C\equiv CH$,
$-C(CH_3)_2-C_3H_7-n$, $-C(CH_3)_2-CH(CH_3)_2$,

$-C(CH_3)_2-C_4H_9-n$, $-C(CH_3)_2-CF_3$, 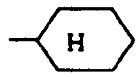, 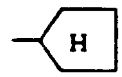,

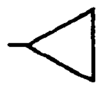, 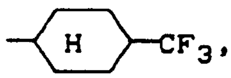, 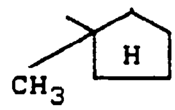.

## Claims

1. Selective herbicidal agents, characterised in that they contain an active compound combination consisting of

(1) 4-amino-3-methyl-6-phenyl-1,2,4-triazin-5(4H)-one (metamitron) of the formula (I)

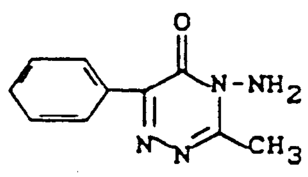

(I)

and

(2) at least one 4-amino-1-carbamoyl-3-methyl-1,2,4-(1H)-triazolin-5-one substituted on the amide nitrogen atom, of the general formula (II)

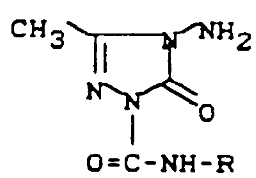

(II)

in which

R represents straight-chain or branched $C_1$-$C_{10}$-alkyl (which can optionally be substituted by halogen), or represents straight-chain or branched $C_3$-$C_8$-alkenyl or $C_3$-$C_8$-alkinyl, or represents $C_3$-$C_6$-cycloalkyl (which can optionally be substituted by methyl or trifluoromethyl).

2. Selective herbicidal agents according to Claim 1, characterised in that the weight ratio of active compound of the formula (I) to the active compound from group (II) in the active compound combinations is between 1 : 0.01 and 1 : 10, preferably between 1 : 0.1 and 1 : 5.

3. Method of selectively combating weeds in beet crops, characterised in that an active compound combination according to Claim 1 is allowed to act on the beet fields before or after emergence of the plants.

4. Use of active compound combinations according to Claim 1 for selectively combating weeds in beet crops.

5. Process for the preparation of selective herbicidal agents, characterised in that an active compound combination according to Claim 1 is mixed with extenders and/or surface-active agents.

6. Selective herbicidal agents according to Claim 1, characterised in that the active compound combination consists of metamitron (I) and a compound of the formula (II)

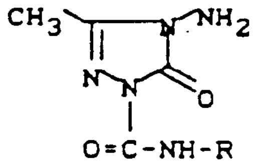

(II)

wherein

R represents $C_3$-$C_8$-alkyl which is optionally substituted by fluorine or chlorine, or represents $C_3$-$C_5$-alkenyl, or represents $C_3$-$C_5$-alkinyl, or represents $C_3$-$C_6$-cycloalkyl which is optionally substituted by trifluoromethyl.

7. Selective herbicidal agents according to Claim 1, characterised in that the active compound combination consists of metamitron (I) and a compound of the formula (II)

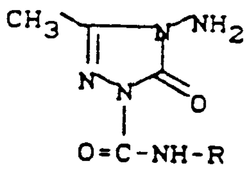

(II)

wherein

R represents one of the radicals mentioned below:

$-C(CH_3)_3$, $-C(CH_3)_2-CH_2-Cl$, 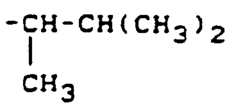 ,

$-C(CH_3)_2-CH_2-CH_3$, $-C(CH_3)_2-CH_2-F$, $-C(CH_3)_2-C\equiv CH$,
$-C(CH_3)_2-C_3H_7-n$, $-C(CH_3)_2-CH(CH_3)_2$,

$-C(CH_3)_2-C_4H_9-n$, $-C(CH_3)_2-CF_3$, 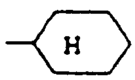 , 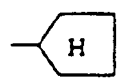 ,

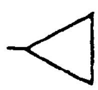 , 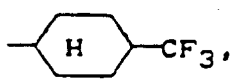 , 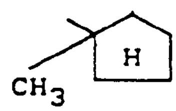 .

## Revendications

1. Produits herbicides sélectifs, caractérisés en ce qu'ils contiennent une combinaison de substances actives consistant en :

(1) la 4-amino-3-méthyl-6-phényl-1,2,4-triazine-5(4H)-one (métamitrone) de formule I :

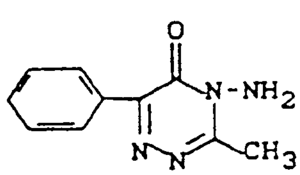

(I)

et

(2) au moins une 4-amino-1-carbamoyl-3-méthyl-1,2,4-(1H)-triazoline-5-one substituée sur l'atome d'azote d'amide, de formule générale II :

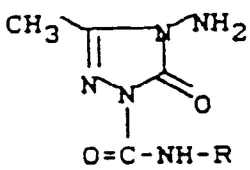

(II)

dans laquelle

R représente un groupe alkyle à chaîne droite ou ramifiée en $C_1$-$C_{10}$ (qui peut le cas échéant être substitué par des halogènes), un groupe alcényle en $C_3$-$C_8$ ou alcynyle en $C_3$-$C_8$ à chaîne droite ou ramifiée ou cycloalkyle en $C_3$-$C_6$ (qui peut le cas échéant être substitué par des groupes méthyle ou trifluorométhyle).

2. Produits herbicides sélectifs selon la revendication 1, caractérisés en ce que,dans les combinaisons de substances actives, les proportions relatives en poids entre la substance active de formule I et la substance active du groupe II vont de 1 : 0,01 à 1 : 10, de préférence de 1 : 0,1 à 1 : 5.

3. Procédé pour combattre sélectivement les végétaux adventices dans les cultures de betteraves, caractérisé en ce que l'on fait agir une combinaison de substances actives selon la revendication 1 sur les champs de betteraves avant sortie de terre ou après sortie de terre des végétaux.

4. Utilisation de combinaisons de substances actives selon la revendication 1 pour la lutte sélective contre les végétaux adventices dans les cultures de betteraves.

5. Procédé de préparation de produits herbicides sélectifs, caractérisé en ce que l'on mélange une combinaison de substances actives selon la revendication 1 avec des diluants et/ou des agents tensioactifs.

6. Produits herbicides sélectifs selon la revendication 1, caractérisés en ce que la combinaison de substances actives consiste en la métamitrone I et un composé de formule II :

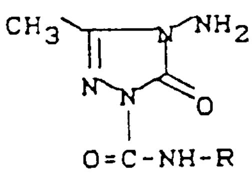

(II)

dans laquelle

R représente un groupe alkyle en $C_3$-$C_8$ éventuellement substitué par le fluor ou le chlore, un groupe alcényle en $C_3$-$C_5$, un groupe alcynyle en $C_3$-$C_5$ ou un groupe cycloalkyle en $C_3$-$C_6$ éventuellement substitué par un groupe trifluorométhyle.

7. Produits herbicides sélectifs selon la revendication 1, caractérisés en ce que la combinaison de substances actives consiste en la métamitrone I et un composé de formule II :

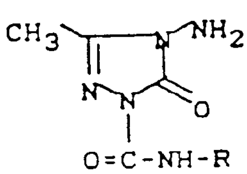

(II)

dans laquelle

R représente l'un des groupes suivants :

$-C(CH_3)_3$, $-C(CH_3)_2-CH_2-Cl$, 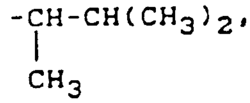,

$-C(CH_3)_2-CH_2-CH_3$, $-C(CH_3)_2-CH_2-F$, $-C(CH_3)_2-C \equiv CH$, $-C(CH_3)_2-C_3H_7-n$, $-C(CH_3)_2-CH(CH_3)_2$,

$-C(CH_3)_2-C_4H_9-n$, $-C(CH_3)_2-CF_3$, 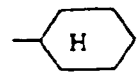, 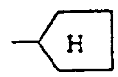,

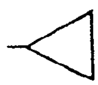, 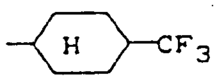, 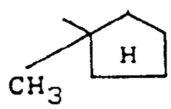.